(19)

Europäisches
Patentamt
European
Patent Office
Office européen
des brevets

(11) **EP 2 046 087 B1**

(12) **EUROPEAN PATENT SPECIFICATION**

(45) Date of publication and mention
of the grant of the patent:
**17.08.2011 Bulletin 2011/33**

(51) Int Cl.:
***H04W 64/00*** (2009.01)

(21) Application number: **08165307.3**

(22) Date of filing: **26.09.2008**

(54) **Terminal positioning technique**

Endgerät-Positionierungstechnik

Technique de positionnement terminal

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **02.10.2007 GB 0719117**

(43) Date of publication of application:
**08.04.2009 Bulletin 2009/15**

(73) Proprietor: **Vodafone Group PLC
Newbury
Berkshire RG14 2FN (GB)**

(72) Inventor: **Markoulidakis, Yannis
171 22, Nea Smyrni (GR)**

(74) Representative: **Keston, David Arthur
Vodafone Group Services Ltd.
Group Legal (Patents)
Vodafone House
The Connection
Newbury
Berkshire RG14 2FN (GB)**

(56) References cited:
**EP-A- 1 355 505      WO-A-2005/060304
WO-A-2006/105618    GB-A- 2 416 461**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

This invention relates to a mobile terminal positioning and/or tracking technique and an associated arrangement.

With the increasing capacity and area coverage of cellular networks around the world, mobile telecommunications users are demanding new and improved services from their mobile telecommunications providers. In particular, of late there has been an increased interest in Location Based Services (LBS) in mobile communications.

LBS provide a mobile terminal user with location based content delivery, such as local weather forecasts, and can also enable the mobile terminal user to identify people or outlets near their vicinity. For instance, a mobile phone user can contact a LBS provider to identify their closest petrol station, restaurant, bank or the like, based upon the user's current mobile phone location. Similarly, it can be used to find the location of friends or family, such as for reasons of safety or emergency, or simply meeting up, by requesting the LBS provider for a location update on one or more person. These services can assist users, by saving them time, rather than travelling around a given geographical area, looking for a particular outlet/person, thus potentially avoiding traffic jams. It can also assist people in emergency situations, such as by helping them quickly identify their nearest hospital or the location of someone requiring emergency assistance.

A wide variety of mobile terminal positioning techniques have been proposed to date. One simple method uses the nearest cell area as a means to provide an approximate terminal position, for instance by assuming the terminal to be positioned at the centre of a cell area that is a 120 degree sector of a circle (in a tri-sectorial cellular network). This method is currently being used by operators that have already introduced commercial LBS. The accuracy of this approach depends on the size of the cell's coverage area, but will typically provide a mobile terminal position that is accurate to within a couple of kilometres. While this approach is adequate for services where low positioning accuracy is necessary, such as local weather forecasting, it is generally considered to be insufficiently accurate for services that require high positioning accuracy, such as in the situation where a person needs to be located due to an emergency situation.

WO 2006/105618 relates to a method for facilitating zone based charging - by providing a reliable confirmation that the location of a mobile device is within a particular geographic area - a home/school/work zone - to which a lower call tariff may be applied.

The Global Positioning System (GPS) is currently one of the most accurate positioning systems available. GPS works using a constellation of twenty-four earth-orbiting satellites. The orbits are arranged so that at any time, anywhere on Earth, there are at least three satellites "visible" in the sky. With a GPS Receiver, it is possible to deduce a position, relative to the "visible" satellites. In this regard, the GPS receiver locates three or more of these satellites, determines the distance to each, and uses trilateration to deduce its position. Assisted-GPS (A-GPS) has also been proposed. According to A-GPS technique the network provides the GPS equipped terminal with information which allows for fast identification of the satellites which are visible in the area of the terminal as well as synchronization information which can significantly improve the speed and reliability of the GPS receiver.

While GPS and A-GPS can be accurate to several metres, a problem with these techniques is that they require line-of-sight to at least three satellites to provide a position measurement. Therefore, these techniques perform poorly in environments where there are obstructions, such as in high-rise urban environments, tree-covered or mountainous areas, and indoor environments. It is vital that a suitable technique be found for indoor environments, since mobile terminal users typically spend a significant portion of their time in this environment.

WO2005/060304 relates to a method for estimating *indoor* location, the method including a model that corrects for radio signal attenuation at boundary walls and/or internal walls and/or due the angle of incidence.

A further problem with the GPS approach is that it is not inexpensive to implement. For an LBS to be worth implementing, the service will require a location technique that can achieve reasonable positional accuracy while entailing commercially reasonable deployment costs. Such costs are generally related to the extent and complexity of additional software and hardware to be incorporated at the mobile terminals and/or in the network. There are also other issues to consider, such as any penalties imposed by the tracing techniques and procedures upon storage/memory requirements and battery power consumption at the mobile terminals.

Further, as mentioned above, satellite-positioning information is not always available, meaning that an alternative, or at least a complementary alternative, is necessary.

Summary of the Invention

The present invention provides a method according to claim 1, a mobile terminal according to claim 6 and a computer program according to claim 8.

This aspect of the invention is particularly suited for use with a network based positioning technique for indoor environments, and is particularly complementary to Assisted GPS.

Brief Description of the Drawings

Figure 1 illustrates a schematic diagram of a mobile telecommunications network in which the present invention may be implemented;

Figure 2 illustrates a graph showing the typical signal behaviour in an outdoor environment, being a busy street of an urban area;

Figure 3 illustrates a graph showing the typical signal behaviour for a mobile terminal moving towards an indoor environment;

Figure 4 illustrates the statistical results in relation to simultaneous Received Signal Strength drop/increase measurements taken in 45 different buildings and over distances of approximately 40km outdoors;

Figure 5 illustrates a flow chart showing the operation of a mobile terminal in idle mode according to an embodiment of the invention; and

Figure 6 illustrates a flow chart showing the operation the core network when determining the terminal's position according to an embodiment of the invention.

Detailed Description of Embodiments of the Invention

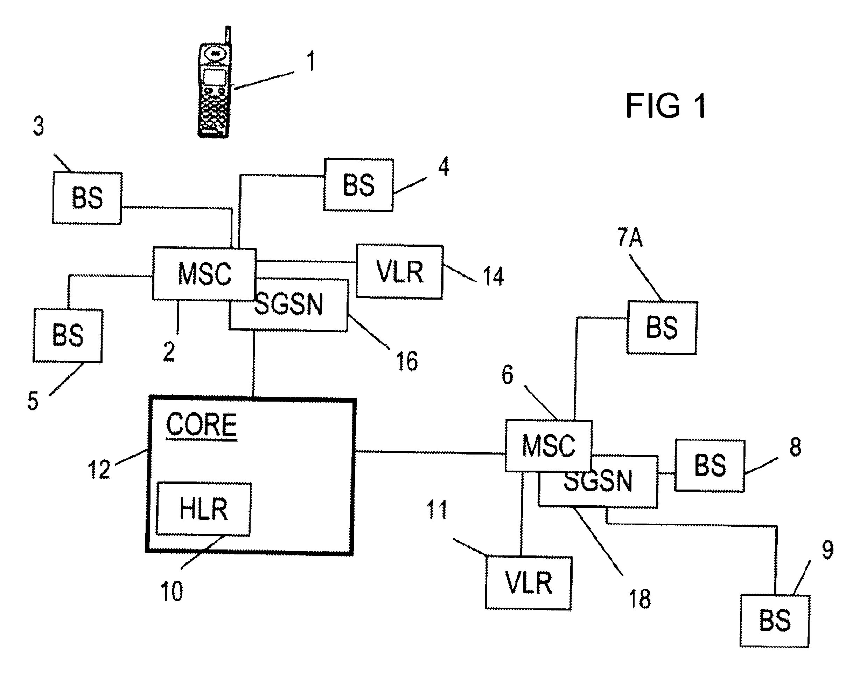

Key elements of a mobile telecommunications network, and its operation, will now briefly be described with reference to Figure 1.

Each cell corresponds to a respective base station (BS) of its cellular or mobile telecommunications network that receives calls from and terminates calls at any mobile terminal in that cell by wireless radio communication in one or both of the circuit switched or packet switched domains. Such a subscriber's mobile terminal or User Equipment (UE) is shown at 1. The mobile terminal may be a handheld mobile telephone, a personal digital assistance (PDA) or a laptop computer equipped with a datacard.

In a GSM mobile telecommunications network, each base station comprises a base transceiver station (BTS) and a base station controller (BSC). A BSC may control more than one BTS. The BTSs and BSCs comprise the radio access network.

The present invention will be described in relation to a GSM network, although it is to be appreciated that the inventive concepts can readily be applied to other mobile network arrangements, including UMTS and SAE/LTE.

Conventionally, in a GSM network, the base stations are arranged in groups and each group of base stations is controlled by one mobile switching centre (MSC), such as MSC 2 for base stations 3, 4 and 5. As shown in Figure 1, the network has another MSC 6, which is controlling a further three base stations 7, 8 and 9. In practice, the network will incorporate many more MSCs and base stations than shown in Figure 1. The base stations 3, 4, 5, 7, 8 and 9 each have dedicated (not shared) connection to their MSC2 or MSC6 - typically a cable connection. This prevents transmission speeds being reduced due to congestion caused by other traffic.

Each subscriber to the network is provided with a smart card or SIM which, when associated with the user's mobile terminal identifies the subscriber to the network. The SIM card is pre-programmed with a unique identification number, the "International Mobile Subscriber Identity" (IMSI) which is not visible on the card and is not known to the subscriber. The subscriber is issued with a publicly known number, that is, the subscriber's telephone number, by means of which calls to the subscriber are initiated by callers. This number is the MSISDN.

The network includes a home location register (HLR) 10 which, for each subscriber to the network, stores the IMSI and the corresponding MSISDN together with other subscriber data, such as the current or last known Location Area of the subscriber's mobile terminal.

When a mobile terminal is in idle mode it selects one cell to be synchronised (the primary cell) based on the strongest received signal strength. To achieve this, the terminal periodically monitors the received signal strength from the primary and a set of up to six neighbouring cells. As the terminal moves, the set of monitored cells as well as the primary cell may change.

Whenever a mobile terminal (being in idle mode) selects a new primary cell which detects that it belongs to a different Location Area (through the Location Area Identity that each cell is broadcasting) from that of the previously selected primarily cell, the mobile terminal will then send a location area update request to the core network 12.

With this background in mind, an implementation of the first embodiment of the invention will now be described, in relation to the situation of a subscriber using mobile terminal 1 to initiate a Location Based Service (LBS). LBS is a class of mobile communication services in which the service logic exploits the terminal position as an input so as to enhance the offered service (e.g., provide the address of a restaurant in the vicinity of the user current location).

According to this first embodiment of the invention, while the terminal 1 is in idle mode it will be periodically measuring the RSS from its primary and neighbouring base stations. It does this by measuring and storing, in a time-stamped list, the RSS measurements from its primary base station as well as neighbouring base stations.

The expression "base station" is to be taken to encompass both standard base stations in a cell, and also pico-cells such as Access Points (APs). The number of neighbouring base stations usually varies from one up to six, depending on the location and the density of the cells. In an urban environment, the typical number of visible neighbouring cells is six due to the high density of base stations.

Software on the mobile terminal 1 processes the RSS measurements in order to detect whether the terminal has entered or left an indoor environment. This software may have been installed on the terminal during manufacture, or downloaded to the terminal at a later time by the terminal user. Moreover, it is also feasible to have this software module running on the SIM card (e.g. based on the capabilities provided by SIM Toolkit).

The software, in analysing the RSS measurements, is looking to identify simultaneous variations of the received signal strengths from the primary cell as well as the majority of neighbouring cells.

In this regard, it has been advantageously determined and verified through field trials that once a mobile terminal makes the transition from an outdoor environment to an indoor environment, the RSS measurements from the primary and neighbouring cells drop simultaneously by a number of decibels.

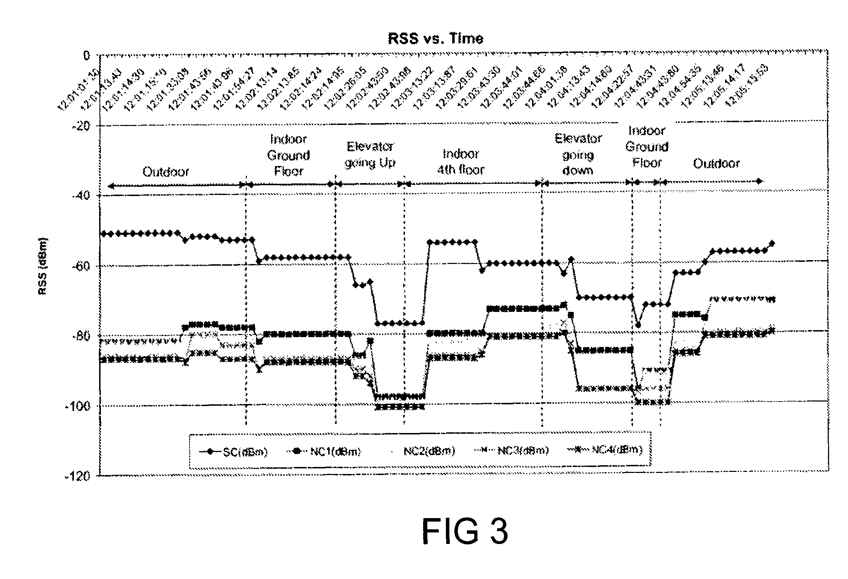

Figure 3 illustrates a graph of RSS against time for a mobile terminal travelling from an outdoor environment, to the ground floor of a building, then up into an elevator to the fourth floor, before returning to the ground floor and then out of the building again. This graph shows the RSS levels for the base station of the primary or serving cell (SC) in which the terminal is located, as well as for four neighbouring cells (NC1, NC2, NC3, NC4). There is a clear simultaneous drop in signal strength for all cells once the terminal moves indoors. Moreover, it can be seen that as the terminal moves about within the indoor environment, further simultaneous RSS drops or increases can be observed, such as when the terminal enters and leaves the elevator.

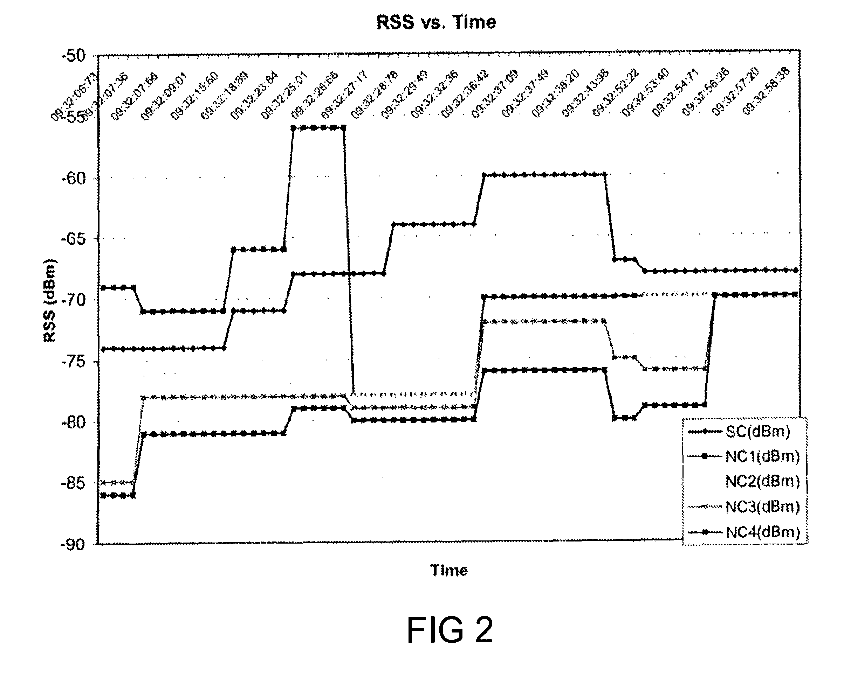

On the other hand, Figure 2 illustrates a typical example of RSS measurements for a mobile terminal's primary or serving cell (SC) and four neighbouring cells (NC1, NC2, NC3, NC4) in a outdoor environment, namely travelling along a busy urban street. This Figure indicates that although there is a large variation of the RSS from the various visible cells as the terminal moves along the street, there are no simultaneous drop/increase events.

It has also been determined that the number of decibels by which the primary and neighbouring cells drop is related to the nature of the indoor environment, such as the type of materials the external walls of the building are made from and also, for multi-storey buildings, the level on which the terminal is located. A reverse pattern is observed when the terminal moves from an indoor environment towards an outdoor environment.

Table 1 presents the expected signal attenuation introduced by different kinds of construction materials.

**TABLE 1**

| Material | Attenuation (dB) |
|---|---|
| Glass (6mm) | 0.8 |
| Glass (13mm) | 2.0 |
| Lumber (76mm) | 2.8 |
| Brick (89mm) | 3.5 |
| Brick (178mm) | 5.0 |
| Brick (267mm) | 7.0 |
| Concrete (102mm) | 12.0 |
| Masonry Block (203mm) | 12.0 |
| Brick Faced Concrete (192mm) | 14.0 |
| Masonry Block (406mm) | 17.0 |
| Concrete (203mm) | 23.0 |
| Reinforced Concrete (203mm) | 27.0 |
| Masonry Block (610mm) | 28.0 |
| Concrete (305mm) | 35.0 |

The software on the mobile terminal 1 therefore determines when it has entered or left an indoor environment by checking whether either (or both) of the following two conditions have been met:

$$Rx(t_{k+1},i) < Rx(t_k,i) \qquad \text{for } i = 1,2\ldots M \qquad (1)$$

or

$$Rx(t_{k+1},i) > Rx(t_k,i) \qquad \text{for } i = 1,2\ldots M \qquad (2)$$

where $Rx(t_k,i)$ is the RSS value at time instance $t_k$ from cell $i = 1,2\ldots M$. Index $i$ indicates the set of visible cells with $i = 1$ for the primary cell. Equation (1) corresponds to the Simultaneous RSS Drop situation, while equation (2) corresponds to the Simultaneous RSS Increase situation.

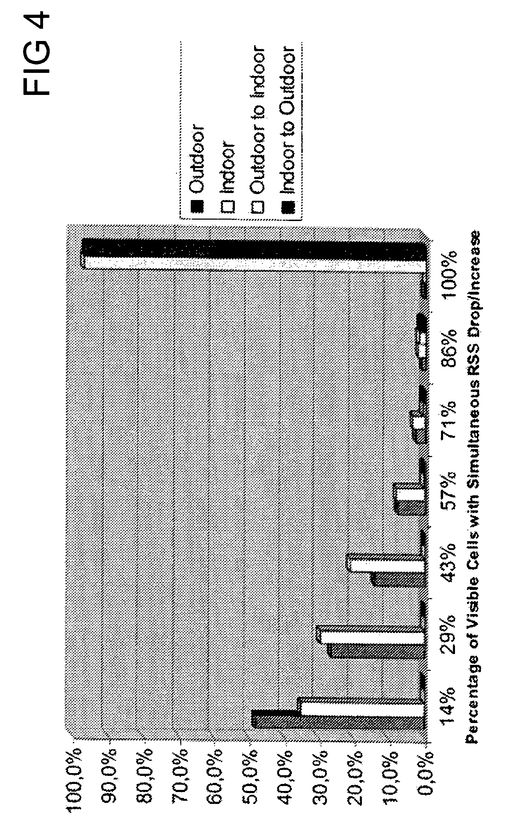

Referring to Figure 4, it is evident that for GSM at least, M should be greater than approximately 60% of the visible cells. For instance, where the number of visible cells is 6, M should be 4 or greater. In this regard, it is to be appreciated that Figure 4 shows the statistical results in relation to simultaneous RSS drop/increase experiments taken in 45 different buildings and over distances of approximately 40km outdoors. Figure 4 is expressed as a percentage of visible cells that were experiencing a simultaneous RSS drop/increase, as the number of visible cells in the experiments varied from one up to six.

When it is detected that the terminal has made the transition to an indoor environment, the software program stores the measurements collected immediately before the indoor environment detection. The terminal flags that it is now in an indoor environment and continues to monitor the RSS of the primary and neighbouring cells.

The change may be flagged using a Change Event Counter. At terminal power up, the counter is set at zero and is updated each time a Simultaneous RSS Drop or Increase is determined. For instance, if a simultaneous drop is detected, then the counter increases by 1 to indicate that the terminal has moved indoors. Where a simultaneous RSS increase is detected, then the counter is decreased by 1, or remains zero if the current counter value is zero. Therefore, a counter value of zero indicates that the terminal is in an outdoor location.

Preferably the RSS measurements are stored in two lists, a current list and a reserved list. The current list stores the N most recently collected measurements along with an appropriate time stamp for each. The reserved list is intended to capture measurements corresponding to the most recent outdoor position of the terminal. In this regard, the Reserved list stores the K most recent measurements when the Change Event Counter was zero. Preferably the Reserved List stores the same number of measurements as the Current List (i.e. K = N) but in the general case K can be different from N. Based on empirical evidence, a typical value of K and N of around 100 is considered adequate for reaching a satisfactory terminal positioning accuracy.

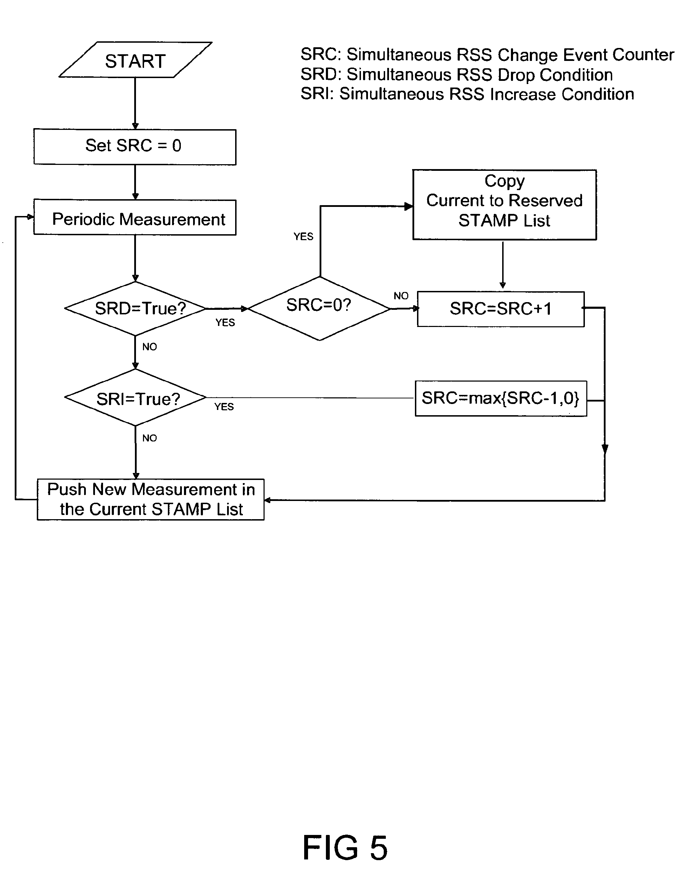

The operation of the terminal in idle mode according to this embodiment of the invention is illustrated in the flow chart of Figure 5. In operation, at terminal power up, the Counter, referred to here as Simultaneous RSS Change (SRC), will be set to zero. At this stage the Reserved List will be empty, as the Current List will store the relevant data. Periodic RSS measurements are then undertaken. In taking these measurements, it will be checked whether a Simultaneous RSS Drop Condition (SRD) has occurred. If it has, and the Counter (SRC) is set at zero, the counter will be increased to 1, indicating that a simultaneous drop event has occurred, and the K most recent measurements of the Current List will become the elements of the Reserved List. In this regard, the contents of the Reserved List will correspond to the most recent outdoor terminal position. The RSS measurement just taken will then be entered into the Current List before another measurement is taken.

If a Simultaneous RSS Drop Condition (SRD) has not occurred, it is then checked whether or not a Simultaneous RSS Increase Condition (SRI) has occurred. If an SRI has not occurred, then the measurement that was just obtained will be placed in the Current List, before another measurement is taken.

If a SRI condition has occurred, then the value of the Counter (SRC) will be checked, and will be reset to 0, if necessary. This can be achieved using the following equation:

$$SRC = \max\{SRC-1,0\} \qquad (3)$$

The RSS measurement just taken will then be entered into the Current List before another measurement is taken. This process will continue while the terminal is in idle mode. Where the Counter (SRC) becomes zero again, then the Reserved list will be reset by copying the Current List at that point in time over to the Reserved List.

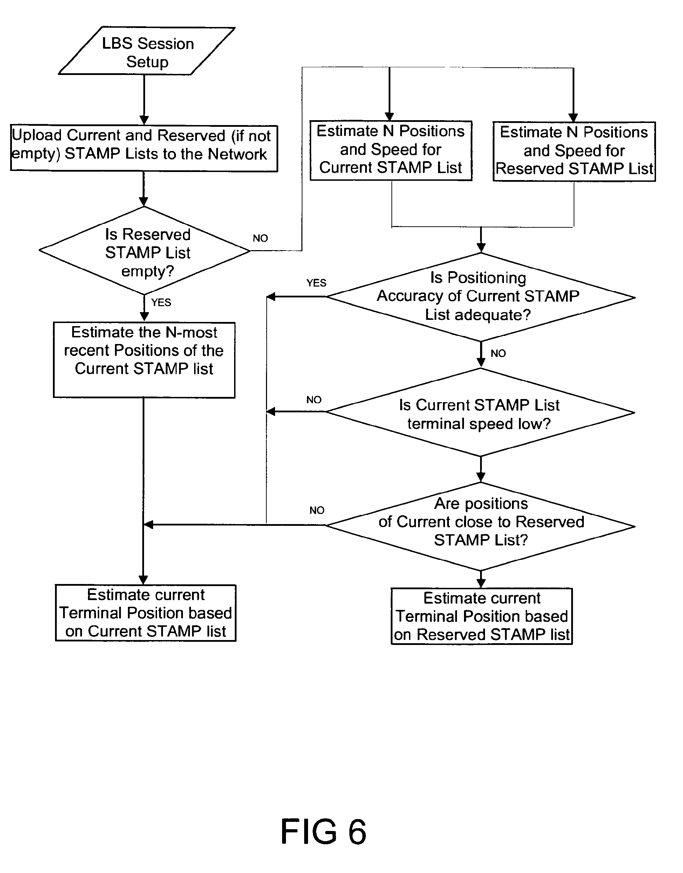

When a user wishes to use the mobile terminal to initiate an LBS, the terminal will transfer from idle mode to active or dedicated mode, and commence the set-up phase for the LBS session. This is illustrated in the flowchart of Figure 6.

At the set-up phase of the LBS session, the terminal uploads the Current List of measurements and the Reserved List, if the Reserved List is not empty, to the core network. All the measurements are accompanied by their relevant time-stamp. The terminal also provides the current value of the Counter (SRC). From these measurements, a positioning server located at the core network, can look to determine whether the terminal is indoors or outdoors and estimate an approximate position of the mobile terminal. More particularly, the positioning server uses the historical terminal position data corresponding to both the Current and the Reserved lists to statistically estimate the terminal's position. Where the Reserved List is empty, this is an indication that the terminal has not entered an indoor environment, and so the terminal position can be estimated in the usual manner.

Where the SRC Counter has a value of 1, this is an indication that the terminal is currently in an indoor environment. In this situation, both the Current and the Reserved Lists will contain data, and so it will be necessary to determine whether the Reserved List corresponds to the most recent outdoor terminal position. This can be achieved by taking the following two criteria into account:

(a) The terminal positions resulting from the Current List are close to the last position of the Reserved List (e.g. less than 300m-500m); and
(b) The resulting terminal speed for the set of measurements corresponding to the Current List is low (e.g. less than 2-5km/hr).

If both criteria are fulfilled, then the Reserved list is considered to correspond to the most recent outdoor terminal position. Otherwise the Reserved List is ignored, as it may correspond to a misleading Simultaneous RSS increase/ decrease event sequence. In this situation, where the Reserved List is ignored, it is preferable that the network contacts the terminal to instruct it to reset the Reserved List.

The first criterion takes into consideration that if the value of the SRC Counter does not properly reflect the terminal environment, then after some time period the distance between the terminal position corresponding to the Reserved and the Current list will deviate significantly.

The second criterion takes into consideration that if the value of the Counter properly reflects the terminal environment (i.e. indoors) then the terminal speed corresponding to the Current List with a Counter value SRC>0 should be low, as the terminal will be located indoors. If the value of the Counter does not properly capture the terminal environment, then the terminal speed criterion can help the network to detect this.

In the extreme case of both criteria being satisfied, and the value of the SRC Counter still not corresponding to the actual terminal environment (i.e. indoors/outdoors) then the accuracy of the terminal positioning will not be significantly affected as the terminal is still close to the position resulting from the Reserved List and its speed is low.

This aspect of the invention therefore accounts for possible occurrences of simultaneous RSS increases and decreases occurring in situations other than transitions between indoor/outdoor environments.

In this regard, although analysis of the signal drop patterns has shown that the simultaneous signal drop characterises the outdoor to indoor terminal motion with a very high reliability, it has been found to occur in other situation, albeit rarely. One exception that has been found in an outdoor environment is that of the terminal entering a highway tunnel. Conversely, an indoor environment exception where it was found that the simultaneous drop may not occur, was in relation to the terminal entering a shop with large windows. Based on these observations the simultaneous signal drop effect can be described as being characteristic of entering an "indoor equivalent" environment and is not met in "outdoor equivalent" environments. These two criteria also take into consideration the fact that when the terminal is switched on the SRC Counter has an initial value which may not match the terminal environment.

According to a further embodiment of the invention, a further criterion is taken into consideration before considering the Reserved List as the main source of terminal positioning. This further criterion allows for the special situation of enabling better indoor positioning using micro- or pico-cells. In the case that an indoor environment is covered by a set of micro- or pico-cells (which is the case for e.g. airports) then the terminal positioning accuracy which can be achieved by exploiting the RSS measurements of the Current List can be very accurate due to small area covered by these cells (radius ranging from 10m-200m). Comparing the range of these cells with the typical urban macro cell range of 500m-1000m it is obvious that the measurements stored in the Current List may lead to better accuracy compared to the measurements stored in the Reserved List.

Where the terminal last collected measurements in an indoor, or otherwise sheltered environment, then a technique with an appropriate adjustment algorithm will need to be applied. Suitable known techniques for indoor environments include trilateration, Database Correlation Method (DBCM or DCM), GPS combined with DBCM and Kalman filtering. For example, in DBCM the signature of indoor environments is predicted taking into consideration indoor propagation conditions depending on factors such as the building construction and the floor in which the terminal is located. DBCM exploits a cost function to best match the terminal signature with a number of potential terminal locations and the identification of a single point in DBCM is based on statistical filtering. The present invention is not to be considered to be limited to the techniques listed.

In addition to using the Current and/or Reserved Lists to estimate the terminal position, the data in these lists can also be used to estimate the terminal speed. Again, Kalman filtering may be used to obtain these estimates.

Although the embodiments of the invention have been described in relation to entering and leaving an indoor environment, it is considered that these embodiments of the invention equally apply to other environments where there are obstructions, such as in high-rise urban environments (urban-canyon effect) and tree-covered or mountainous areas and the same simultaneous drop/increase occurs. It is considered that the embodiments of the invention apply equally to any environment where the simultaneous drop/increase effect occurs, as signal compensation will still be required.

Further, these embodiments of the invention can be supported by the emerging Open Mobile Alliance (OMA) Standards (e.g. ULP protocol v 2.0), which allows for the upload of multiple historical measurements.

The embodiments of the invention have been described in relation to the mobile terminal monitoring and determining its own simultaneous drop/increase situations. This is not essential to the invention, and the same functionality may be implemented external to the terminal. For instance, the terminal may forward the RSS measurements to the core network for processing.

## Claims

1. A method of determining when a mobile terminal makes transitions between an indoor environment and an outdoor environment in a mobile communications network including:

    obtaining received signal strength measurements for the mobile terminal, relating to a plurality of proximate cells, the step of obtaining the received signal strength measurements including: causing the terminal, whilst in idle mode, to measure a received signal strength from a plurality of proximate cells; and storing the received signal strength measurements, wherein the received signal strength measurements include a corresponding measurement time-stamp;
    comparing the received signal strength measurements for the plurality of proximate cells with one or more previous measurement for each of the respective cells;
    determining that the mobile terminal has made a transition between an indoor environment and an outdoor environment when the comparison step shows that the received signal strength measurements from a predetermined proportion of the proximate cells have substantively changed within a predetermined time interval.

2. The method of claim 1, wherein a move from the indoor environment to the outdoor environment is inferred when the substantive change in received signal strength measurements is a substantive increase.

3. The method of claim 1 or claim 2, wherein a move from the outdoor environment to the indoor environment is inferred when the substantive change in received signal strength measurements is a substantive decrease.

4. The method of any one of the preceding claims wherein the predetermined proportion is at least 60 per cent.

5. The method of any one of the preceding claims wherein the predetermined proportion is substantially 100 per cent.

6. A mobile terminal configured for use in a mobile telecommunications network comprising:

    measuring means configured to measure a received signal strength from a plurality of proximate cells whilst in idle mode;
    storage means for storing the received signal strength measurements, the received signal strength measurements including a corresponding measurement time-stamp; and
    comparison means configured to compare the received signal strength measurements for the plurality of proximate cells with a previous measurement for each of the respective cells, and determine that the mobile terminal has made a transition between an indoor environment and an outdoor environment when the comparison shows that the received signal strength measurements from a predetermined proportion of the proximate cells have substantively changed within a predetermined time interval.

7. The mobile terminal of claim 6 further including a counter to indicate whether the terminal is considered to be in the indoor environment or the outdoor environment.

8. A software program configured for use on a mobile telecommunications terminal and configured to perform the following steps:

obtaining Received Signal Strength (RSS) measurements from a plurality of proximate cells, the step of obtaining the received signal strength measurements including: causing the terminal, whilst in idle mode, to measure a received signal strength from a plurality of proximate cells; and storing the received signal strength measurements, wherein the received signal strength measurements include a corresponding measurement time-stamp; comparing the RSS measurements for the plurality of proximate cells with one or more previous measurement for each of the respective cells; and

determining that the mobile terminal has made a transition between an indoor environment and an outdoor environment when the comparison step shows that the received signal strength measurements from a predetermined proportion of the proximate cells have substantively changed within a predetermined time interval.

**Patentansprüche**

1. Verfahren zum Ermitteln, wenn ein mobiles Endgerät zwischen einer Innenumgebung und einer Außenumgebung in einem mobilen Kommunikationsnetz wechselt, das Folgendes beinhaltet:

Gewinnen von Empfangssignalstärkemessungen für das mobile Endgerät in Bezug auf mehrere in der Nähe befindliche Zellen, wobei der Schritt des Gewinnens der Empfangssignalstärkemessungen Folgendes beinhaltet: Bewirken, dass das Endgerät im Ruhemodus eine Empfangssignalstärke von mehreren in der Nähe befindlichen Zellen misst; und Speichern der Empfangssignalstärkemesswerte, wobei die Empfangssignalstärkemesswerte einen entsprechenden Messzeitstempel aufweisen;

Vergleichen der Empfangssignalstärkemessungen für die mehreren in der Nähe befindlichen Zellen mit einem oder mehreren früheren Messwerten für jede der jeweiligen Zellen;

Ermitteln, ob das mobile Endgerät zwischen einer Innenumgebung und einer Außenumgebung gewechselt ist, wenn der Vergleichsschritt zeigt, dass sich die Empfangssignalstärkemesswerte innerhalb eines vorbestimmten Zeitintervalls von einem vorbestimmten Anteil der in der Nähe befindlichen Zellen erheblich verändert haben.

2. Verfahren nach Anspruch 1, wobei dann auf eine Bewegung von der Innenumgebung in die Außenumgebung geschlossen wird, wenn die erhebliche Änderung der Empfangssignalstärkemesswerte eine erhebliche Erhöhung ist.

3. Verfahren nach Anspruch 1 oder Anspruch 2, wobei dann auf eine Bewegung von der Außenumgebung in die Innenumgebung geschlossen wird, wenn die erhebliche Änderung der Empfangssignalstärkemesswerte eine erhebliche Verringerung ist.

4. Verfahren nach einem der vorherigen Ansprüche, wobei der vorbestimmte Anteil wenigstens 60 Prozent beträgt.

5. Verfahren nach einem der vorherigen Ansprüche, wobei der vorbestimmte Anteil im Wesentlichen 100 Prozent beträgt.

6. Mobiles Endgerät, konfiguriert für den Einsatz in einem mobilen Telekommunikationsnetzwerk, das Folgendes umfasst:

Messmittel, konfiguriert zum Messen einer Empfangssignalstärke von mehreren in der Nähe befindlichen Zellen im Ruhemodus;

Speichermittel zum Speichern der Empfangssignalstärkemesswerte, wobei die Empfangssignalstärkemesswerte einen entsprechenden Messzeitstempel aufweisen; und

Vergleichsmittel, konfiguriert zum Vergleichen der Empfangssignalstärkemesswerte für die mehreren in der Nähe befindlichen Zellen mit einem vorherigen Messwert für jede der jeweiligen Zellen, und Ermitteln, dass das mobile Endgerät zwischen einer Innenumgebung und einer Außenumgebung übergewechselt ist, wenn der Vergleich zeigt, dass sich die Empfangssignalstärkemesswerte innerhalb eines vorbestimmten Zeitintervalls von einem vorbestimmten Anteil der in der Nähe befindlichen Zellen erheblich geändert haben.

7. Mobiles Endgerät nach Anspruch 6, das ferner einen Zähler zum Anzeigen beinhaltet, ob das Endgerät als in der Innenumgebung oder der Außenumgebung befindlich angesehen wird.

8. Softwareprogramm, konfiguriert für den Einsatz an einem mobilen Telekommunikationsendgerät und konfiguriert zum Ausführen der folgenden Schritte:

Gewinnen von RSS-(Empfangssignalstärke)-Messwerten von mehreren in der Nähe befindlichen Zellen, wobei der Schritt des Gewinnens der Empfangssignalstärkemesswerte Folgendes beinhaltet: Bewirken, dass das Endgerät im Ruhemodus eine Empfangssignalstärke von mehreren in der Nähe befindlichen Zellen misst; und Speichern der Empfangssignalstärkemesswerte, wobei die Empfangssignalstärkemesswerte einen entsprechenden Messzeitstempel aufweisen;

Vergleichen der RSS-Messwerte für die mehreren in der Nähe befindlichen Zellen mit einem oder mehreren früheren Messwerten für jede der jeweiligen Zellen; und

Feststellen, dass das mobile Endgerät zwischen einer Innenumgebung und einer Außenumgebung übergewechselt ist, wenn der Vergleichsschritt zeigt, dass sich die Empfangssignalstärkemesswerte innerhalb eines vorbestimmten Zeitintervalls von einem vorbestimmten Anteil der in der Nähe befindlichen Zellen erheblich verändert haben.

## Revendications

1. Procédé destiné à déterminer le moment où un terminal mobile fait des transitions entre un environnement intérieur et un environnement extérieur dans un réseau de communications mobiles, comprenant les opérations consistant à :

   obtenir des mesures d'intensité du signal reçu pour le terminal mobile, relatives à une pluralité de cellules proches, l'étape d'obtention des mesures d'intensité du signal reçu englobant les actions suivantes : obliger le terminal, pendant qu'il se trouve en mode veille, à mesurer une intensité de signal reçu provenant d'une pluralité de cellules proches ; et stocker les mesures d'intensité du signal reçu, cas dans lequel les mesures d'intensité du signal reçu contiennent un horodatage de mesure correspondant ;

   comparer les mesures d'intensité du signal reçu concernant la pluralité des cellules proches à une ou plusieurs mesures antérieures effectuées pour chacune des cellules respectives ;

   déterminer que le terminal mobile a fait une transition entre un environnement intérieur et un environnement extérieur lorsque l'étape de comparaison montre que les mesures d'intensité du signal reçu en provenance d'une proportion prédéterminée de cellules proches présentent un changement substantiel dans les limites d'un intervalle de temps prédéterminé.

2. Procédé selon la revendication 1, un déplacement depuis l'environnement intérieur vers l'environnement extérieur étant déduit lorsque le changement substantiel dans les mesures d'intensité du signal reçu représente une augmentation substantielle.

3. Procédé selon la revendication 1 ou la revendication 2, un déplacement depuis l'environnement extérieur vers l'environnement intérieur étant déduit lorsque le changement substantiel dans les mesures d'intensité du signal reçu représente une diminution substantielle.

4. Procédé selon l'une quelconque des revendications précédentes, la proportion prédéterminée étant au moins égale à 60 pour cent.

5. Procédé selon l'une quelconque des revendications précédentes, la proportion prédéterminée étant sensiblement égale à 100 pour cent.

6. Terminal mobile configuré pour être utilisé dans un réseau de télécommunications mobiles, comprenant :

   des moyens de mesure lesquels sont configurés pour mesurer une intensité de signal reçu provenant d'une pluralité de cellules proches pendant que le poste est en mode veille ;

   des moyens de stockage pour stocker les mesures d'intensité du signal reçu, les mesures d'intensité du signal reçu contenant un horodatage de mesure correspondant ; et

   des moyens de comparaison lesquels sont configurés pour comparer les mesures d'intensité du signal reçu concernant la pluralité des cellules proches à une mesure antérieure effectuée pour chacune des cellules respectives, et pour déterminer que le terminal mobile a fait une transition entre un environnement intérieur et un environnement extérieur lorsque la comparaison montre que les mesures d'intensité du signal reçu en provenance d'une proportion prédéterminée de cellules proches présentent un changement substantiel dans les limites d'un intervalle de temps prédéterminé.

7. Terminal mobile selon la revendication 6, comportant en outre un compteur destiné à indiquer si le terminal est considéré comme étant dans l'environnement intérieur ou dans l'environnement extérieur.

8. Programme logiciel configuré pour être utilisé sur un terminal de télécommunications mobiles et configuré pour réaliser les étapes suivantes :

   obtenir des mesures d'intensité du signal reçu (soit RSS, abréviation de l'expression « received signal strength ») à partir d'une pluralité de cellules proches, l'étape d'obtention des mesures d'intensité du signal reçu englobant les actions suivantes : obliger le terminal, pendant qu'il se trouve en mode veille, à mesurer une intensité de signal reçu provenant d'une pluralité de cellules proches ; et stocker les mesures d'intensité du signal reçu, cas dans lequel les mesures d'intensité du signal reçu contiennent un horodatage de mesure correspondant ;
   comparer les mesures RSS concernant la pluralité des cellules proches à une ou plusieurs mesures antérieures effectuées pour chacune des cellules respectives ; et
   déterminer que le terminal mobile a fait une transition entre un environnement intérieur et un environnement extérieur lorsque l'étape de comparaison montre que les mesures d'intensité du signal reçu en provenance d'une proportion prédéterminée de cellules proches présentent un changement substantiel dans les limites d'un intervalle de temps prédéterminé.

## FIG 1

FIG 2

EP 2 046 087 B1

FIG 3

FIG 4

START

Set SRC = 0

Periodic Measurement

SRD=True?

SRI=True?

Push New Measurement in
the Current STAMP List

SRC: Simultaneous RSS Change Event Counter
SRD: Simultaneous RSS Drop Condition
SRI: Simultaneous RSS Increase Condition

YES

Copy
Current to Reserved
STAMP List

SRC=0?

NO

YES

NO

SRC=SRC+1

YES

SRC=max{SRC-1,0}

NO

# FIG 5

**FIG 6**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006105618 A
- WO 2005060304 A